# EUROPEAN PATENT SPECIFICATION

(11) **EP 0 539 438 B1**
(45) Date of publication and mention of the grant of the patent: **12.04.1995**
(21) Application number: 91913050.0
(22) Date of filing: 12.07.1991
(51) Int. Cl.: B60G 17/08, F16F 9/06

(54) **self-pumping, self-levelling damper unit**
Selbst pumpende, selbst nivellierende Sto dämpfereinheit
dispositif amortisseur auto-pompant à auto-ajustement de la garde au sol

(30) Priority: 24.07.1990 GB 9016203
(43) Date of publication of application: 05.05.1993
(73) Proprietor: THE UNIVERSITY OF HUDDERSFIELD, Huddersfield HD1 3DH (GB)
(72) Inventor: Tang, Jing, Shen, Derby DE1 3PQ (GB); Hall, Brian, Barrie, Huddersfield HD7 1TU (GB)
(74) Representative: Bray, Lilian Janet
(86) International application number: GB9101160
(87) International publication number: WO9201579

(56) References cited:
- EP-A- 0 318 817
- EP-A- 0 351 537
- EP-A- 0 389 828
- FR-A- 2 552 513
- FR-A- 2 562 843
- GB-A- 727 574
- GB-A- 2 132 313

## Description

The present invention relates to a damper unit for use in a vehicle suspension and in particular to a self-energizing self-levelling damper unit for use in a semi-active vehicle suspension arrangement.

Conventional passive vehicle suspensions are not capable of adjusting to the wide range of dynamic conditions which they meet in practice. These conditions include varying road profiles, vehicle speeds and handling conditions. It means that optimum performance of passive suspensions is necessarily limited to one type of road profile and vehicle speed condition.

For example, described in EP-A-0318817 and corresponding to the preamble of claim 1, is a hydropneumatic shock-absorber and vibration damper comprising a cylinder divided by a piston into top and bottom working chambers each filled with a hydraulic damping medium. Three connecting members hydraulically connect the two working chambers to a compensating chamber. External flexible connecting lines are used between the connecting members. A first throttle or damping valve is disposed in the line between the two working chambers and a second, preferably adjustable, damping valve is connected in the line between the top working chamber and the compensating chamber. Whilst it is stated in this specification that the shock-absorber can without difficulty be used for setting a level, by supplying or withdrawing damping medium through a connecting member and corresponding line, such an arrangement would not, however, be capable of providing a self-energizing, self-levelling damper unit.

On the other hand, fully active suspensions, which exploit the developments of microprocessors, transducers and optimal control theory, are capable of maintaining optimum performance over a wide range of operating conditions. Adjustments to the suspension forces can be made by actuators which receive signals via a microprocessor from a range of transducers attached to the vehicle.

Semi-active vehicle suspensions have been developed as viable alternatives to fully active suspensions, which are expensive in terms of hardware and require significant amounts of power in operation. It has been shown that the optimal performance achievable with fully active systems can be approached with well designed semi-active systems. These systems normally incorporate transducers to monitor suspension positions and velocities together with controllable dampers whose settings are adjusted by a microprocessor.

Whereas fully active systems are able to supply energy to the suspension, semi-active systems are not. When there is a demand for power to be put into the suspension (as determined by the controller), semi-active systems switch to a notional zero damping state. At other times in their operation there is a need to dissipate energy and this is achieved by switching the dampers to two or more settings, or more desirably, adjusting them continuously to meet the needs of the controller. Currently, a number of manufacturers have developed switchable damper systems and developments are known to be under way on continuously variable dampers.

In general, the performance of semi-active systems is compromised by changes in vehicle payload. In effect, as payload on the vehicle is increased, the suspension working space is reduced, leading to a reduction in performance. This problem can be overcome by combining with controllable dampers, a self-levelling system which maintains the design working-space. Most existing self-levelling designs are hydropneumatic systems which require additional hardware such as a hydraulic pump.

It is an object of the present invention to provide a self-levelling damper unit for a semi-active vehicle suspension which is self energizing.

According to the present invention there is provided a self-energizing self-levelling damper unit for use in a vehicle suspension system comprising a piston and cylinder arrangement containing a damping fluid for connection between two relatively movable portions of the system, a first gas reservoir, and valve means to regulate the flow of the damping fluid,
and characterised in that
the piston and cylinder arrangement defines three chambers of variable volume dependent upon the relative positions of the components of the arrangement,
the first gas reservoir to which the internal pressure of one of the chambers is communicated can expand or shrink in volume to compensate for the difference in the total volume of the piston and cylinder arrangement as the components of the arrangement move relative to one another,
the valve means regulate the flow of the damping fluid between the first and the second chambers and between the second and third chambers,
and in that
a gas spring means comprising a second gas reservoir is provided to which the internal pressure of another of the chambers is communicated, and
control means are provided for the valve means to permit the damping fluid to flow in a controlled manner from the third chamber to the second chamber and thence to the first chamber and vice versa until an optimum position of the components of the piston and cylinder arrangement is reached, and thereafter operate to prevent the flow of the damping fluid between at least the first chamber and the second chamber and to control the movement of fluid between the second chamber and the third chamber to damp the relative movement of the portions of the system.

Preferably, the valve means comprises two independently operable valves to control the flow of the damping fluid between the first and the second chambers and between the second and the third chambers respectively.

Preferably also, the valve controlling the flow of damping fluid between the first and the second chambers comprises a fully openable valve. This valve is preferably controllable to permit fluid flow either in one direction only or the opposite direction only, or can be closed to prevent fluid flow therethrough.

Preferably also, the valve controlling the flow of damping fluid between the second and the third chambers comprises a valve which can either be fully opened to permit fluid flow in one direction or variably partially opened to control the rate of fluid flow in the other direction. This valve preferably comprises a continuously variable-rate damping valve.

Preferably also, the control means comprises means to measure the pressure of the damping fluid within at least two of the chambers and means to monitor the relative movement of the components of the piston and cylinder arrangement.

It will be appreciated that in the present invention, when payload is added to the vehicle, self levelling is achieved by the self-energized pumping action provided by the ground profile. This causes relative movement across the suspension arrangement which increases the pressure in a gas reservoir. Thus, in a short distance of travel (depending on the degree of roughness of the ground surface), the working space is restored to its design value. Computer simulations predict that on an average road in the UK, this self-levelling process will take approximately three seconds for a payload/vehicle mass ratio of 0.14 and a vehicle speed of 54 km/h. On relatively smooth ground surfaces, where self-levelling takes longer, there is no serious disadvantage since the levels of vibration induced in the vehicle are relatively low.

It is proposed that the self-energizing self-levelling (SESL) damper unit of the invention is used in conjunction with a pair of controllable valves, one a fully-open fully-closed type, the other a continuously variable-rate damping valve. These valves may be either internal or external to the SESL unit.

A specific embodiment of the invention will now be described by way of an example with reference to the drawings in which:-
Figure 1 shows a damper unit according to the invention located at one wheel station of a vehicle;
Figures 2(a) to 2(c) show diagrammatically three stages in the self-levelling process of a damper unit as shown in Figure 1 arising from the addition of payload to the vehicle; and
Figures 3(a) to 3(c) show diagrammatically three stages in the self-levelling process of a damper unit as shown in Figure 1 arising from the removal of payload from the vehicle.

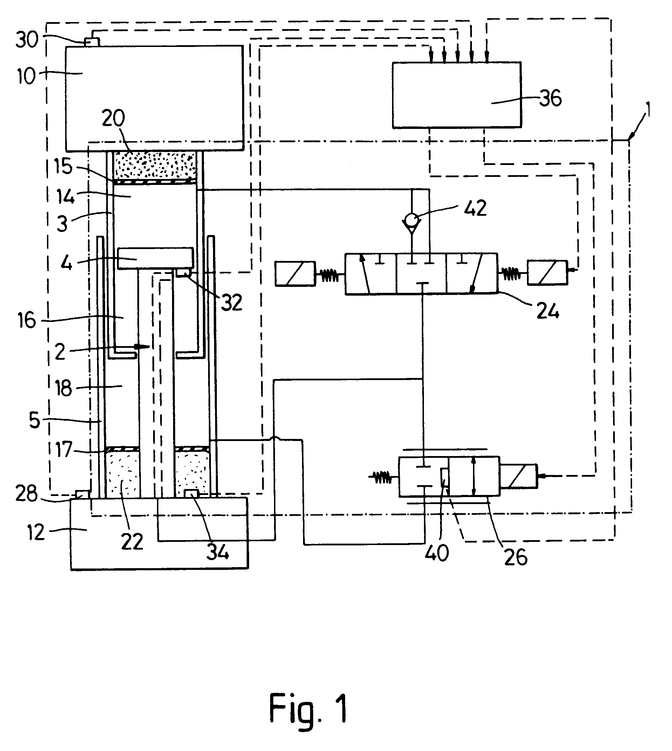

The suspension layout and instrumentation shown in Figure 1 are intended to put the damper unit of the invention into context. While accelerometers and a microprocessor are common features of other known semi-active suspensions, the combination of a SESL unit (with pressure transducers) and a continuously variable-rate damper are not.

As shown in Figure 1, a damper unit 1 according to the invention comprises a piston and cylinder arrangement wherein a piston 2 can move longitudinally within a first cylinder 3 and thereby define two chambers 14 and 16 of variable volume in the cylinder 3 on either side of the piston head 4. The cylinder 3 is itself partially enclosed by a second cylinder 5 within which it can also move longitudinally in the manner of a piston to define a third chamber 18. Each of the chambers 14, 16 and 18 is filled with an hydraulic damping fluid.

When forming part of a vehicle suspension arrangement as shown diagrammatically in Figure 1, the damper unit 1 is located between a sprung mass 10 and an un-sprung mass 12. The sprung mass can be considered to be a proportion of a vehicle body mass, while the un-sprung mass represents the mass of a single wheel and axle.

The chambers 14 and 18 also define gas reservoirs 20 and 22 each separated from the hydraulic fluid in the chambers by elastic diaphragms 15 and 17, or in a modified arrangement by pistons. Alternatively to reduce the overall height of the unit, these gas reservoirs may be located externally of the cylinders 14 and 18. The volume of the gas reservoirs 20 and 22 shrinks or expands depending upon the internal pressure of the chambers 14 and 18 respectively. The upper reservoir 20 is provided to act as a gas spring for the damper unit when self-levelling of the unit has been achieved. It therefore acts to assist in the control of the relative movement of the masses 10 and 12. The lower reservoir 22 is essentially provided to compensate for the difference in the total volume of the chambers 16 and 18 as the cylinder 3 moves within the second cylinder 5. This volume difference is related to the thickness of the chamber wall of the cylinder 3.

The flow of fluid between chambers 14 and 16 is controlled by a valve 24 and between the chambers 16 and 18 by a valve 26. These valves 24,26 are themselves controlled by signals from two accelerometers 28 and 30 and two pressure transducers 32 and 34 via a microprocessor 36. The accelerometers 28 and 30 are located respectively on the un-sprung mass 12 and the sprung mass 10 and can detect the change in the acceleration of these masses 10,12 as the vehicle moves. The pressure transducers 32 and 34 are located respectively within the chamber 16 and the chamber 18 or the gas reservoir 22 and detect the pressure within these chambers. The microprocessor 36 processes the information received from the accelerometers 28,30 and the transducers 32,34 and controls the operation of the valves 24 and 26 in accordance therewith as will be described.

Also connected to the microprocessor 36 is a third accelerometer 40, which is located within the valve 26, and measures the acceleration of the valve closure member to give information on the velocity and displacement of the closure member. This information is used by the microprocessor 36 to control the operation of the valve 26 and thereby control the damping effect produced by the valve 26 as will also be described.

The valve 24 is a solenoid operated spring return three position, three connection directional control valve. Essentially, this means that it can permit the flow of fluid through it in both directions either in a first valve position from chamber 14 to chamber 16 or vice versa when in a second valve position. In addition, in a third valve position it is closed to prevent fluid flow in either direction.

A third valve 42, comprising a check valve, is also located in the fluid line between the chamber 14 and the valve 24. In the first position of the valve 24, wherein fluid can flow from the chamber 14 to the chamber 16, the check valve 42 is bypassed. However, in the second position of the valve 24 wherein fluid can flow from the chamber 16 to the chamber 14, the check valve is not bypassed and acts to prevent this flow if the pressure in the chamber 16 is less than that in the chamber 14.

The valve 26 is a solenoid operated spring return proportional valve which can be controlled to permit free flow of fluid from the chamber 18 to the chamber 16 but only a restricted flow in the opposite direction during self-levelling. The microprocessor 36 controls the operation of the valve 26 using the information from the transducers 32,34 so that the valve 26 is fully open when the pressure in the chamber 18 is higher than that in the chamber 16 to permit free flow of fluid from the chamber 18 to the chamber 16 but only partially open otherwise so that the fluid flow from the chamber 16 back to the chamber 18 is restricted to a greater or lesser degree dependent upon the degree of opening of the valve 26.

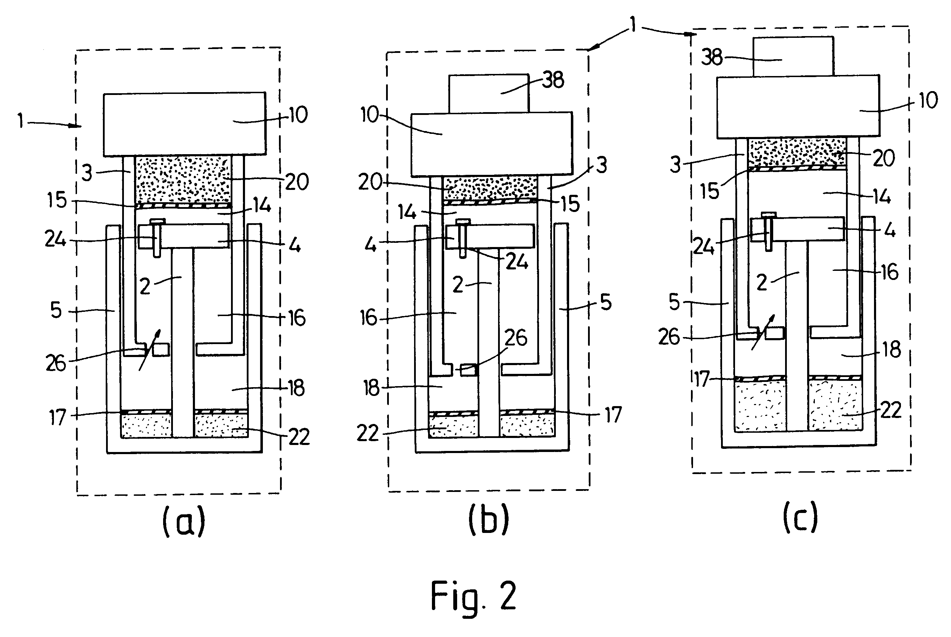

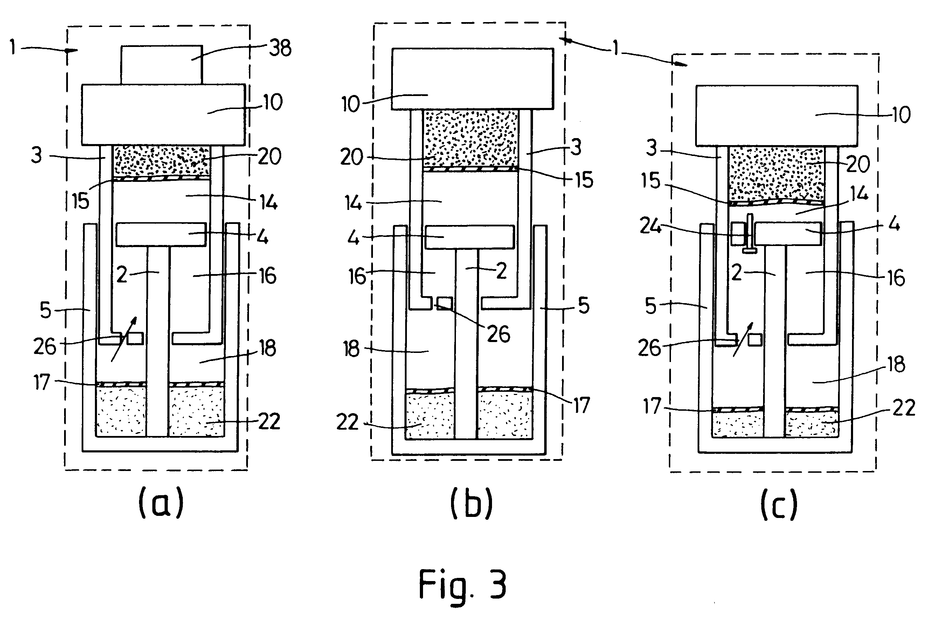

Turning now to the operation of the damper unit, in Figures 2(a) to 2(c) and 3(a) to 3(c) internal valving is shown in order to simplify the illustrations. In addition, the microprocessor 36 and the transducers 32 and 34 are omitted from these diagrams for simplicity. The mode of operation of the damper unit 1 is one of self-levelling followed by operation as a semi-active suspension. In the former the unit 1 acts as a variable spring and a two stage damper whereas in the latter the unit 1 acts as a constant spring and a variable damper.

Figures 2(a) to 2(c) show three stages in the self-levelling process of the damper unit 1 after the vehicle has been loaded with a payload, which is shown diagrammatically as the weight 38. In contrast, Figures 3(a) to 3(c) show the self-levelling process after the payload 38 has been removed.

The valves 24 and 26 shown in Figure 1 are represented in Figures 2(a),2(b) and 2(c) for simplicity as internal to the unit 1. In Figure 2(b) the payload 38 has been added to the existing sprung mass, shown in Figure 2(a), while the vehicle is stationary. At the time the payload 38 is added, the valve 26 is fully open and the pressures in chambers 16 and 18 are equal. The valve 24 is then closed under pressure and the air in reservoir 20 is compressed. The result is a downward deflection of the payload 38 and body masses. When the vehicle begins to move, Figure 2(c), the SESL unit 1 is energised by the input from the ground surface, the valve 24 is then operated as a non-return valve and the operation of the valve 26 is controlled. The latter is kept fully open when the volume of the chamber 16 is increasing, otherwise it is only partially opened to produce damping and hence control vibration. The relative motion across the SESL unit 1 pumps fluid from chamber 18 through chamber 16 into chamber 14, gradually lifting the vehicle body to the desired mean position.

Thus in the position shown in Figure 2(b), the valve 24 is controlled by the microprocessor 36 and placed in its second position so that it permits fluid flow from the chamber 16 to the chamber 14 when the pressure in chamber 16 is higher than that in the chamber 14. In this way, the input from the ground surface acts as a pump to increase the volume of the chamber 14 and thereby lifts the vehicle. In contrast, the valve 26 is controlled so that when the pressure in the chamber 18 is higher than that in the chamber 16 it is fully open to permit free flow of fluid from chamber 18 into chamber 16. However, when pressure in the chamber 18 is not higher than that in the chamber 16, the flow of fluid through the valve 26 back from chamber 16 into chamber 18 is restricted. This is beneficial in reducing the vibration level of the sprung mass 10.

As shown in Figure 2(c), when the desired suspension position of the damper unit 1 is detected by the microprocessor 36 from the information it receives from the accelerometers 28 and 30, then the valve 24 is placed in its third position so that it is closed to fluid flow in both directions between the chambers 14 and 16. The opening and closing of the valve 26 is then controlled by the microprocessor 36 using the information received from the accelerometers 28,30 and the transducers 32,34,40 according to a predetermined control strategy in order to achieve a near optimal performance of the suspension system. Hence, the damper unit 1 permits the suspension arrangement to operate as a semi-active suspension in which the movement of the fluid between the chambers 16 and 18 is controlled by the valve 26 which acts as a controllable damper. The upper gas reservoir 20 also assists in the damping process once the self-levelling position has been reached.

Figures 3(a) to 3(c) show the reverse situation when the payload is off-loaded from the vehicle. Figure 3(a) shows the best position of the damper unit 1 when the vehicle contains the payload 38. When the payload 38 is removed from the stationary vehicle as shown in Figure 3(b), the valve 26 is fully opened and the pressure in the chambers 16 and 18 causes the gas reservoir 20 to expand to lift the sprung mass 10 above its desired position as shown on Figure 3(b). Valve 24 is then opened into its first position permitting fluid to flow from the chamber 14 to the chamber 16 and valve 26 is also fully opened to permit fluid to flow from the chamber 16 to the chamber 18 until the fluid pressures are preferably equalized and the vehicle body has returned to its desired position as shown in Figure 3(c). Alternatively, valves 24 and 26 could both be opened simultaneously with the removal of the payload 38. This allows the vehicle body to remain at the desired height as the pressure in chamber 14 falls and fluid is transferred back to chamber 18 via chamber 16.

The damper unit of the invention may also be operated as a passive SESL suspension. In this case, valve 26 needs to be replaced by a pair of (passive) spring loaded one-way valves arranged to control the flow of fluid between chambers 16 and 18. The asymmetric damping characteristics required of passive suspensions can be obtained with valves having different pre-loads and stiffnesses. The transducers 32, 34, 40 and the microprocessor 36 are, of course, not required in this case.

## Claims

1. A damper unit for use in a vehicle suspension system comprising
a piston and cylinder arrangement (2,3,5) containing a damping fluid for connection between two relatively movable portions (10,12) of the system,
a first gas reservoir (22), and
valve means (24,26) to regulate the flow of the damping fluid,
and characterised in that
the piston and cylinder arrangement (2,3,5) defines three chambers (14,16,18) of variable volume dependent upon the relative positions of the components of the arrangement (2,3,5),
the first gas reservoir (22) to which the internal pressure of one of the chambers (14,16,18) is communicated can expand or shrink in volume to compensate for the difference in the total volume of the piston and cylinder arrangement (2,3,5) as the components of the arrangement move relative to one another,
the valve means (24,26) regulate the flow of the damping fluid between the first and the second chambers (14,16) and between the second and third chambers (16,18), and in that
a gas spring means comprising a second gas reservoir (20) is provided to which the internal pressure of another of the chambers (14,16,18) is communicated, and
control means (28,30,32,34,36,40) are provided for the valve means, to permit the damping fluid to flow in a controlled manner from the third chamber (18) to the second chamber (16) and thence to the first chamber (14) and vice versa until an optimum position of the components (2,3,5) of the piston and cylinder arrangement is reached, and thereafter operate to prevent the flow of the damping fluid between at least the first chamber (14) and the second chamber (16) and to control the movement of fluid between the second chamber (16) and the third chamber (18) to damp the relative movement of the portions (10,12) of the system.

2. A damper unit as claimed in Claim 1, characterised in that the valve means (24,26) comprises first and second independently operable valves (24,26) to control the flow of the damping fluid between the first and the second chambers (14,16) and between the second and the third chambers (16,18) respectively.

3. A damper unit as claimed in Claim 2, characterised in that the first valve (24) is controllable to permit fluid flow either in one direction only or in the opposite direction only, or can be closed to prevent fluid flow therethrough.

4. A damper unit as claimed in Claim 2 or Claim 3, characterised in that a check valve (42) is provided to operate with the first valve (24) and can act to prevent the flow of the damping fluid from the first chamber (14) to the second chamber (16) if the pressure in the second chamber (16) is lower than the pressure in the first chamber (14).

5. A damper unit as claimed in any one of Claims 2 to 4, characterised in that the second valve (26) comprises a valve (26) which can either be fully opened to permit fluid flow in one direction or variably partially opened to control the rate of fluid flow in the other direction.

6. A damper unit as claimed in any one of Claims 2 to 5, characterised in that the second valve (26) comprises a continuously variable-rate damping valve.

7. A damper unit as claimed in any one of Claims 2 to 6, characterised in that the control means (28,30,32,34,36, 40) comprises a first means (40) located within the second valve (26) to monitor the velocity and displacement of a closure member of the valve (26).

8. A damper unit as claimed in any one of Claims 1 to 7, characterised in that the control means (28,30,32,34,36, 40) comprises a second means (32,34) to monitor the pressure of the damping fluid within at least two of the chambers (14,16,18).

9. A damper unit as claimed in any one of Claims 1 to 8, characterised in that the control means (28,30,32,34,36, 40) comprises a third means (28,30) to monitor the relative movement of the components (2,3,5) of the piston and cylinder arrangement.

## Patentansprüche

1. Dämpfereinheit zur Verwendung in einem Kraftfahrzeugaufhängungssystem, die folgendes aufweist:
- eine Kolben-Zylinder-Anordnung (2, 3, 5), die ein Dämpfungsfluid zur Verbindung zwischen zwei relativ zueinander bewegbaren Bereichen (10, 12) des Systems enthält,
- einen ersten Gasbehälter (22), sowie
- eine Ventileinrichtung (24, 26) zur Regulierung der Strömung des Dämpfungsfluids,
dadurch gekennzeichnet,
- daß die Kolben-Zylinder-Anordnung (2, 3, 5) drei Kammern (14, 16, 18) mit in Abhängigkeit von den Relativpositionen der Komponenten der Anordnung (2, 3, 5) variablem Volumen bildet,
- daß der erste Gasbehälter (22), dem der Innendruck von einer der Kammern (14, 16, 18) zugeführt wird, sich im Volumen ausdehnen oder zusammenziehen kann, um die Differenz im Gesamtvolumen der Kolben-Zylinder-Anordnung (2, 3, 5) auszugleichen, wenn sich die Komponenten der Anordnung relativ zueinander bewegen,
- daß die Ventileinrichtung (24, 26) die Strömung des Dämpfungsfluids zwischen der ersten und der zweiten Kammer (14, 16) sowie zwischen der zweiten und der dritten Kammer (16, 18) reguliert,
- daß eine Gasfedereinrichtung mit einem zweiten Gasbehälter (20) vorgesehen ist, der der Innendruck einer anderen der Kammern (14, 16, 18) zugeführt wird,
- und daß eine Steuereinrichtung (28, 30, 32, 34, 36, 40) für die Ventileinrichtung vorgesehen ist, um die Strömung des Dämpfungsfluids auf gesteuerte Weise aus der dritten Kammer (18) in die zweite Kammer (16) und von dort zu der ersten Kammer (14) und umgekehrt zu ermöglichen, bis eine optimale Position der Komponenten (2, 3, 5) der Kolben-Zylinder-Anordnung erreicht ist, und um danach so zu arbeiten, daß die Strömung des Dämpfungsfluids zumindest zwischen der ersten Kammer (14) und der zweiten Kammer (16) verhindert wird, und um die Fluidbewegung zwischen der zweiten Kammer (16) und der dritten Kammer (18) zu steuern, damit die Relativbewegung der Bereiche (10, 12) des Systems gedämpft wird.

2. Dämpfereinheit nach Anspruch 1,
dadurch gekennzeichnet,
daß die Ventileinrichtung (24, 26) ein erstes und zweites Ventil (24, 26) aufweist, die unabhängig von einander betätigbar sind, um die Strömung des Dämpfungsfluids zwischen der ersten und der zweiten Kammer (14, 16) bzw. zwischen der zweiten und der dritten Kammer (16, 18) zu steuern.

3. Dämpfereinheit nach Anspruch 2,
dadurch gekennzeichnet,
daß das erste Ventil (24) so zu steuern ist, daß es die Strömung des Fluids entweder nur in der einen Richtung oder nur in der entgegengesetzten Richtung zuläßt, oder geschlossen werden kann, um den Fluiddurchfluß zu verhindern.

4. Dämpfereinheit nach Anspruch 2 oder 3,
dadurch gekennzeichnet,
daß ein Rückschlagventil (42) vorgesehen ist, um mit dem ersten Ventil (24) zu arbeiten, wobei das Rückschlagventil (42) so wirken kann, daß die Strömung des Dämpfungsfluids aus der ersten Kammer (14) in die zweite Kammer (16) verhindert wird, wenn der Druck in der zweiten Kammer (16) niedriger als der Druck in der ersten Kammer (14) ist.

5. Dämpfereinheit nach einem der Ansprüche 2 bis 4,
dadurch gekennzeichnet,
daß das zweite Ventil (26) ein Ventil (26) aufweist, das entweder vollständig geöffnet werden kann, um die Fluidströmung in der einen Richtung zu ermöglichen, oder variabel teilweise geöffnet werden kann, um den Fluidströmungsdurchsatz in der anderen Richtung zu steuern.

6. Dämpfereinheit nach einem der Ansprüche 2 bis 5,
dadurch gekennzeichnet,
daß das zweite Ventil (26) ein Dämpfungsventil mit kontinuierlich variablem Durchsatz aufweist.

7. Dämpfereinheit nach einem der Ansprüche 2 bis 6,
dadurch gekennzeichnet,
daß die Steuereinrichtung (28, 30, 32, 34, 36, 40) eine erste, innerhalb des zweiten Ventils (26) gelegene Einrichtung (40) aufweist, um die Geschwindigkeit und die Verschiebung eines Schließelements des Ventils (26) zu überwachen.

8. Dämpfereinheit nach einem der Ansprüche 1 bis 7,
dadurch gekennzeichnet,
daß die Steuereinrichtung (28, 30, 32, 34, 36, 40) eine zweite Einrichtung (32, 34) aufweist, um den Druck des Dämpfungsfluids innerhalb von mindestens zwei der Kammern (14, 16, 18) zu überwachen.

9. Dämpfereinheit nach einem der Ansprüche 1 bis 8,
dadurch gekennzeichnet,
daß die Steuereinrichtung (28, 30, 32, 34, 36, 40) eine dritte Einrichtung (28, 30) aufweist, um die Relativbewegung der Komponenten (2, 3, 5) der Kolben-Zylinder-Anordnung zu überwachen.

## Revendications

1. Unité à organe d'amortissement destinée à être utilisée dans une suspension de véhicule, comprenant
un ensemble (2, 3, 5) à piston et cylindre contenant un fluide d'amortissement et destiné à être raccordé entre deux parties (10, 12) mobiles l'une par rapport à l'autre de la suspension,
un premier réservoir (22) de gaz, et
un dispositif (24, 26) à soupapes destiné à réguler la circulation du fluide d'amortissement,
caractérisée en ce que
l'ensemble (2, 3, 5) à piston et cylindre délimite trois chambres (14, 16, 18) de volume variable suivant les positions relatives des éléments de l'ensemble (2, 3, 5) à piston et cylindre,
le premier réservoir (22) de gaz auquel est communiquée la pression interne de la première des chambres (14, 16, 18) peut se dilater ou se contracter pour compenser la différence de volume total de l'ensemble à piston et cylindre (2, 3, 5) lorsque les éléments de cet ensemble se déplacent mutuellement,
le dispositif à soupapes (24, 26) régule la circulation du fluide d'amortissement entre la première et la seconde chambre (14, 16) et entre la seconde et la troisième chambre (16, 18), et en ce que
un dispositif à ressort à gaz comprenant un second réservoir (20) de gaz est réalisé afin que la pression interne d'une autre des chambres (14, 16, 18) lui soit communiquée, et
un dispositif (28, 30, 32, 34, 36, 40) de commande est associé au dispositif à soupapes afin qu'il permette la circulation du fluide d'amortissement de manière réglée de la troisième chambre (18) à la seconde (16) puis à la première (14) et inversement, jusqu'à ce qu'une position optimale des éléments (2, 3, 5) de l'ensemble à piston et cylindre soit atteinte, et qu'il empêche la circulation du fluide d'amortissement entre au moins la première chambre (14) et la seconde chambre (16) et règle le déplacement du fluide entre la seconde chambre (16) et la troisième chambre (18) et amortisse le déplacement relatif des parties (10, 12) de la suspension.

2. Unité à organe d'amortissement selon la revendication 1, caractérisée en ce que le dispositif à soupapes (24, 26) comporte une première et une seconde soupape (24, 26) qui peuvent être commandées indépendamment et qui sont destinées à régler la circulation du fluide d'amortissement entre la première et la seconde chambre (14, 16), et entre la seconde et la troisième chambre (16, 18) respectivement.

3. Unité à organe d'amortissement selon la revendication 2, caractérisé en ce que la première soupape (24) peut être commandée afin qu'elle permette la circulation du fluide soit dans un sens uniquement soit dans l'autre sens uniquement, ou qu'elle puisse être fermée pour empêcher la circulation du fluide.

4. Unité à organe d'amortissement selon la revendication 2 ou 3, caractérisée en ce qu'un clapet de retenue (42) est incorporé afin qu'il agisse avec la première soupape (24) et qu'il puisse empêcher la circulation du fluide d'amortissement de la première chambre (14) vers la seconde chambre (16) lorsque la pression dans la seconde chambre (16) est inférieure à la pression dans la première chambre (14).

5. Unité à organe d'amortissement selon l'une quelconque des revendications 2 à 4, caractérisée en ce que la seconde soupape (26) est une soupape (26) qui peut être soit totalement ouverte pour permettre la circulation du fluide dans un sens, soit partiellement ouverte de manière variable pour régler le débit de circulation du fluide dans l'autre sens.

6. Ensemble à organe d'amortissement selon l'une quelconque des revendications 2 à 5, caractérisé en ce que la seconde soupape (26) est une soupape d'amortissement à débit variant de façon continue.

7. Unité à organe d'amortissement selon l'une quelconque des revendications 2 à 6, caractérisé en ce que le dispositif de commande (28, 30, 32, 34, 36, 40) comporte un premier dispositif (40) placé dans la seconde soupape (26) et destiné à contrôler la vitesse et le déplacement d'un organe obturateur de la soupape (26).

8. Unité à organe d'amortissement selon l'une quelconque des revendications 1 à 7, caractérisée en ce que le dispositif de commande (28, 30, 32, 34, 36, 40) comporte un second dispositif (32, 34) de contrôle de la pression du fluide d'amortissement dans deux au moins des chambres (14, 16, 18).

9. Unité à organe d'amortissement selon l'une quelconque des revendications 1 à 8, caractérisée en ce que le dispositif de commande (28, 30, 32, 34, 36, 40) comporte un troisième dispositif (28, 30) destiné à contrôler le déplacement relatif des éléments (2, 3, 5) de l'ensemble à piston et cylindre.
